# EUROPEAN PATENT APPLICATION

(11) **EP 2 039 802 A1**
(43) Date of publication of application: **25.03.2009**
(21) Application number: 07845224.0
(22) Date of filing: 20.06.2007
(51) Int. Cl.: C23C 26/00, B23H 7/22, C25F 3/16, F02M 61/16

(54) **SURFACE TREATING METHOD BY ELECTRIC DISCHARGE, AND DRESSING METHOD**

(30) Priority: 21.06.2006 JP 2006171556
(71) Applicant: Bosch Corporation, Shibuya-ku Tokyo 150-8360 (JP)
(72) Inventor: FUJII, Kazutaka, Higashi-Matsuyama-shi Saitama 355-8603 (JP); TOMITA, Naohiro, Higashi-Matsuyama-shi Saitama 355-8603 (JP)
(74) Representative: Knapp, Thomas
(86) International application number: PCT/JP2007/062401
(87) International publication number: WO 2007/148716

(57) **Abstract**

To enable surface treatment of the inside of a part or the like and also simplify grinding work by equipment and a procedure that are simple in comparison with convention.

A first semi-sintered electrode 31 that is formed in a tapered shape whose distal end portion becomes smaller in diameter toward the distal end portion is attached to an electrode supporting tube 26, is configured to be rotatable by a motor 27, is positioned near a seat portion 8 of a nozzle body 1, and generates electrical discharge by surface modifying electrical discharge machining method between the seat portion 8 and the first semi-sintered electrode 31, whereby a coating that is formed as a result of the material that forms the first semi-sintered electrode 31 being moved and deposited can be formed on the seat portion 8 and grinding treatment of the inside of the nozzle body 1 matching the outer diameter of a nozzle needle 2 as has conventionally been the case can be rendered unnecessary.

## Description

### Technical Field

The present invention pertains to a method of surface-treating a workpiece represented by a nozzle that is configured to include a columnar member and a body in which this columnar member is slidably housed inside and particularly relates to the simplification and the like of machining work.

### Background Art

Conventionally, in a workpiece represented by a nozzle, for example, that is configured to include a member whose overall outer shape is formed in a columnar shape and a body in which this columnar member is housed such that the columnar member is movable in an axial direction of the columnar member, there are many instances where a coating is administered to the sliding portion of the columnar member and to the contacting portion between the columnar member and the body so that suppression and prevention of wear resulting from sliding and deformation resulting from contact are performed.

For example, in the case of a nozzle, part of the outer peripheral surface of a nozzle needle serves as a sliding portion that slides with respect to the inner peripheral surface of part of an axial hole that is formed in the nozzle body and into which this nozzle needle is movably inserted, and oftentimes, in order to suppress wear and the like resulting from sliding, coating or surface treatment by a publicly known/well-known method such as PVD or CVD is administered to this sliding portion and to the distal end portion of the nozzle needle that sits in a seat portion of the nozzle body (e.g., see Patent Document 1).

However, when a coating is administered to the nozzle needle as has conventionally been the case, the coated portion has a surface film thickness resulting from the coating, so it is necessary to perform machining of the nozzle body in consideration of that film thickness. For example, it is necessary to cut the inner diameter of part of the axial hole in which the nozzle needle slides to match the outer diameter of the sliding portion of the nozzle needle after the coating.

Incidentally, there are problems in that such machining of the inside of the nozzle body requires not only time and effort of work but also skill.

On the other hand, in order to avoid as much as possible such grinding of the inside of the nozzle body, it is conceivable, for example, instead of coating the nozzle needle, to perform coating on sites on the inside of the nozzle body that correspond to the coated portions of the nozzle needle. However, for example, conventional plasma coating requires plasma generation, so it is inherently not suited in the first place for coating of a deep hole bottom of a member like the seat portion of the nozzle body and a side surface portion like the inner peripheral surface of the axial hole, and it has been realistically impossible.

Further, in conventional coating methods, the machining time is long overall, and for that reason, this leads to an increase in the tact time of the overall aforementioned workpiece that requires coating, and, as a result, this has become a factor that hinders price reduction in the finished product. Moreover, in conventional coating methods, equipment expenses are usually high, and combined with the aforementioned problem of the long machining time, this has become a factor that further hinders price reduction.
Patent document 1: Japanese Patent Application Laid-open No. 2004-28051(pp.7-8, FIG.8)

### Disclosure of the Invention

### Problems to be Solved by the Invention

The present invention has been made in diagram of the above-described circumstances and provides a nozzle manufacturing method and a nozzle that enable surface treatment of the inside of a part and can simplify machining work by equipment and a procedure that are simple in comparison with convention.

It is another object of the present invention to provide a nozzle manufacturing method and a nozzle where, different from convention, there is no need to machine the inside of another part to match the dimension of a part to which a surface treatment has been administered.

It is still another object of the present invention to provide a method of surface-treating a workpiece that is difficult to come off and which has excellent resistance to wear by relatively simple work.

### Means for Solving the Problems

According to a first aspect of the present invention, there is provided an electrical discharge surface treatment method that performs surface treatment of a workpiece by surface modifying electrical discharge machining, the electrical discharge surface treatment method comprising:
positioning, in a machining fluid, a semi-sintered electrode that is configured using a predetermined material near a site-to-be-surface-treated of the workpiece that requires surface treatment, connecting a cathode of a machining power supply that outputs a pulse for electrical discharge to the workpiece, connecting an anode of the machining power supply to the semi-sintered electrode, and performing electrical discharge between the workpiece and the semi-sintered electrode while rotating the workpiece around the semi-sintered electrode to thereby form, on the site-to-be-surface-treated of the workpiece, a coating that is formed as a result of the predetermined material of the semi-sintered electrode being moved and deposited.

According to a second aspect of the present invention, there is provided an electrical discharge surface treatment method that performs surface treatment of a workpiece by electrical discharge, the electrical discharge surface treatment method comprising:
positioning a semi-sintered electrode that is configured using a predetermined material near a site-to-be-surface-treated of the workpiece that requires surface treatment, connecting a cathode of a machining power supply that outputs a pulse for electrical discharge to the workpiece, connecting an anode of the machining power supply to the semi-sintered electrode, and performing electrical discharge between the workpiece and the semi-sintered electrode while causing a machining fluid to flow between the workpiece and the semi-sintered electrode to thereby form, on the site-to-be-surface-treated of the workpiece, a coating that is formed as a result of the predetermined material of the semi-sintered electrode being moved and deposited.

According to a third aspect of the present invention, there is provided a semi-sintered electrode dressing method that is used in an electrical discharge surface treatment method, the semi-sintered electrode dressing method comprising:
rotating a semi-sintered electrode while pushing the semi-sintered electrode against a slanted surface of a dressing jig that is configured to include at least one slanted surface and moving the semi-sintered electrode horizontally on the slanted surface to thereby dress the semi-sintered electrode.

According to a fourth aspect of the present invention, there is provided a semi-sintered electrode dressing method that is used in an electrical discharge surface treatment method that positions, in a machining fluid, a semi-sintered electrode that is configured using a predetermined material near a site of a workpiece that requires surface treatment, connects a cathode of a machining power supply that outputs a pulse for electrical discharge to the workpiece, connects an anode of the machining power supply to the semi-sintered electrode, and performs electrical discharge between the workpiece and the semi-sintered electrode to thereby form, on the workpiece, a coating that is formed as a result of the predetermined material of the semi-sintered electrode being moved and deposited and perform surface treatment of the workpiece, the semi-sintered electrode dressing method comprising:
before the electrical discharge machining, connecting the cathode of the machining power supply to the semi-sintered electrode, connecting the anode of the machining power supply to the workpiece, and performing electrical discharge of the opposite polarity from the time of the electrical discharge machining between the workpiece and the semi-sintered electrode to thereby dress the semi-sintered electrode.

### Advantage of the Invention

According to the present invention, different from convention, an electrode in surface modifying electrical discharge machining is inserted into a portion of the inside of a workpiece that requires surface treatment, and electrical discharge machining is performed, so in comparison with convention, a surface treatment can be administered to the inside of a part by relatively simple equipment, and not only is there a reduction in equipment expenses relating to the surface treatment, but outer diameter machining of a part that is disposed inside can be administered to match the inner dimension of a part to whose inside a surface treatment has been administered, so the invention achieve the effects that grinding work of the inside of the part can be avoided as much as possible and price reduction in the finished product resulting from simplification of the manufacturing work resulting from that becomes possible.

Further, despite a relatively simple surface treatment, a hard surface can be obtained, and a workpiece whose reliability has been improved by improving its resistance with respect to wear and shock can be obtained.

Moreover, by using surface modifying electrical discharge machining, work such as sophisticated degreasing that had been necessary in conventional surface treatment methods is unnecessary, so work is further simplified in comparison with convention, and the tact time can be reduced.

Further still, surface treatment of a deep hole bottom and a side surface, which had been impossible in conventional plasma coating, can be performed simply.

### Brief Description of Drawings

FIG. 1 is a longitudinal sectional diagram showing an example of the configuration of a nozzle that has been manufactured by a nozzle manufacturing method of an embodiment of the present invention;

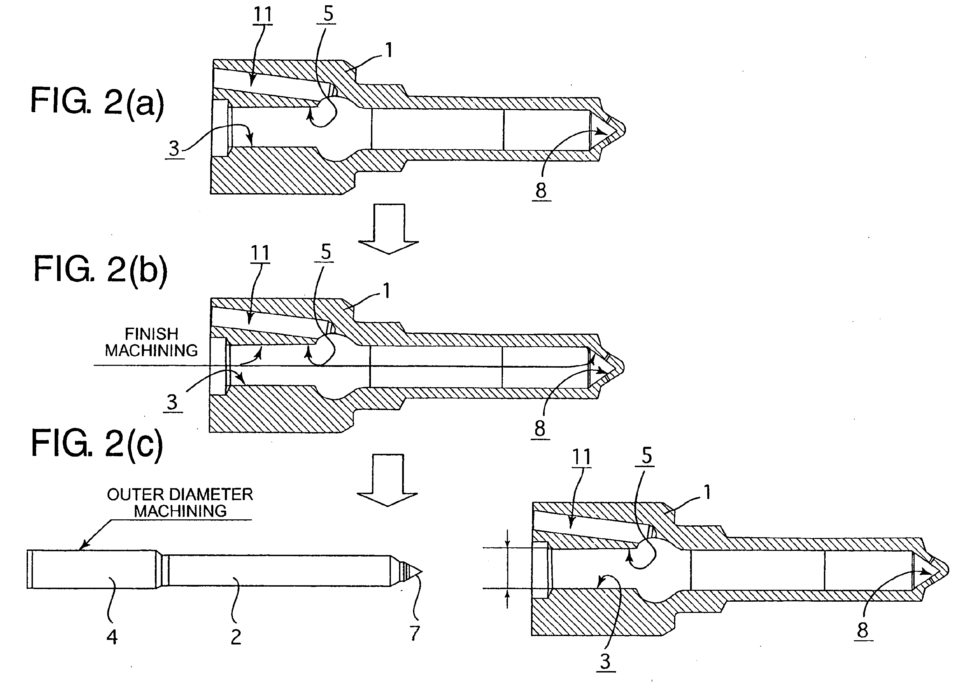

FIG. 2 is an explanatory diagrams describing a general procedure of the nozzle manufacturing method of the embodiment of the present invention, with FIG. 2(a) being an explanatory diagram describing a portion of a nozzle body where surface treatment is required, FIG. 2(b) being an explanatory diagram describing performing finish machining of the inside of the nozzle body after surface treatment of the inside of the nozzle body has been performed, and FIG. 2(c) being an explanatory diagram describing performing outer diameter machining of a nozzle needle on the basis of the inner diameter of the nozzle body;
FIG. 3 is a configural diagram showing the basic configuration of surface modifying electrical discharge machining that is used in the embodiment of the present invention;
FIG. 4 is an explanatory diagram describing a first semi-sintered electrode and a holding structure thereof in the embodiment of the present invention;
FIG. 5 is an explanatory diagram describing surface treatment of a seat portion using a machining bath;
FIG. 6 is an explanatory diagram describing an example of the positional relationship between the first semi-sintered electrode and the seat portion in the surface treatment of the seat portion;
FIG. 7 is an explanatory diagram describing another example of the positional relationship between the first semi-sintered electrode and the seat portion in the surface treatment of the seat portion;
FIG. 8 is an explanatory diagram describing an example of injection of machining oil into the nozzle body;
FIG. 9 is an explanatory diagram describing another example of injection of the machining oil into the nozzle body;
FIG. 10 is an explanatory diagram describing a procedure of surface treatment by surface modifying electrical discharge machining method of a sliding guide portion of the nozzle body in the embodiment of the present invention;
FIG. 11 is an explanatory diagram describing an example of the positional relationship between a second semi-sintered electrode and the nozzle body in surface treatment with respect to the sliding guide portion of the nozzle body;
FIG. 12 is an explanatory diagram describing another example of the positional relationship between the second semi-sintered electrode and the nozzle body in surface treatment with respect to the sliding guide portion of the nozzle body;
FIG. 13 is an explanatory diagram describing still another example of the positional relationship between the second semi-sintered electrode and the nozzle body in surface treatment with respect to the sliding guide portion of the nozzle body;
FIG. 14 is an explanatory diagram describing an example of injection of the machining oil into the nozzle body;
FIG. 15 is a schematic diagram showing, in a schematic cross section, an example of the configuration of the second semi-sintered electrode when performing injection of the machining oil shown in FIG. 14;
FIG. 16 is a schematic diagram showing, in a schematic cross section, another example of the configuration of the second semi-sintered electrode when performing injection of the machining oil shown in FIG. 14;
FIG. 17 is a schematic diagram schematically showing an example of an electrode structure that integrally supports the first and second semi-sintered electrodes;
FIG. 18 is a schematic diagram schematically showing a state where the first semi-sintered electrode in the electrode structure shown in FIG. 17 has been positioned in the seat portion;
FIG. 19 is a schematic diagram schematically showing a state where the second semi-sintered electrode in the electrode structure shown in FIG. 17 has been positioned in the sliding guide portion;
FIG. 20 is an explanatory diagram describing a jig for dressing the first semi-sintered electrode and a way of using that jig;
FIG. 21 is an explanatory diagram describing another example of a jig for dressing the first semi-sintered electrode and a way of using that jig;
FIG. 22 is an explanatory diagrams describing dressing of the first semi-sintered electrode resulting from opposite electrical discharge, with FIG. 22(a) being an explanatory diagram showing a state where the first semi-sintered electrode has been positioned in the seat portion and FIG. 22(b) being an explanatory diagram describing polarities for opposite electrical discharge;
FIG. 23 is a longitudinal sectional diagram showing an example of the configuration of a barrel that serves as another applied example of a workpiece manufacturing method pertaining to the present invention;
FIG. 24 is an explanatory diagram describing surface treatment of the inside of the barrel using a machining bath;
FIG. 25 is an explanatory diagram describing a case where the machining oil is injected into the barrel;
FIG. 26 is an explanatory diagram describing another example of a case where the machining oil is injected into the barrel;
FIG. 27 is a longitudinal sectional diagram of a valve body;
FIG. 28 is a longitudinal sectional diagram showing an enlargement of part of the valve body shown in FIG. 27; and
FIG. 29 is an explanatory diagram describing an example of the positional relationship between the first semi-sintered electrode and a seat portion in surface treatment of the seat portion of the valve body.

### Explanation of Codes

- 1: Nozzle Body
- 2: Nozzle Needle
- 4: Sliding Portion
- 5: Sliding Guide Portion
- 7: Valve Head Portion
- 8: Seat Portion
- 9: Injection Hole
- 21: Holding Tool
- 23: Machining Bath
- 26: Electrode Supporting Tube
- 31: First Semi-Sintered Electrode
- 32: Second Semi-Sintered Electrode
- 34: Slit

### Description of Specific Embodiment

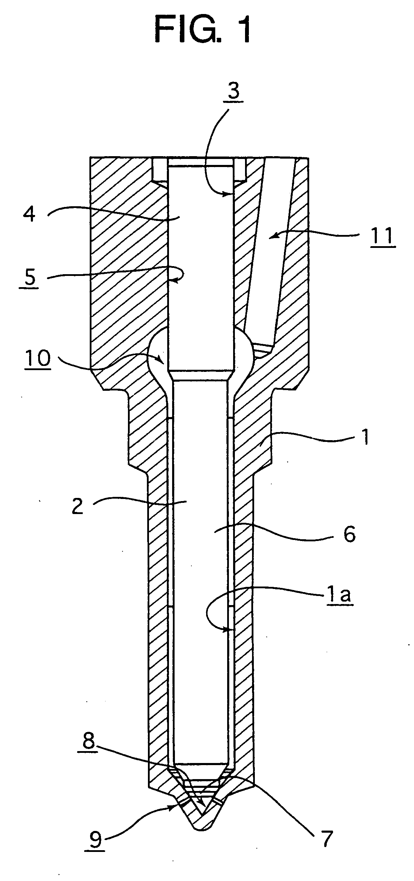

Hereinafter, embodiments of the present invention will be described with reference to FIG. 1 to FIG.29.

It will be noted that the members and arrangements described below are not intended to limit the present invention and can be variously modified within the scope of the gist of the present invention.

First, an example of the configuration of a nozzle that has been manufactured by a nozzle manufacturing method of the embodiment of the present invention will be described with reference to FIG. 1.

This nozzle is used in a fuel injection valve that injects and supplies fuel to an internal combustion engine, and the basic configuration thereof is publicly known.

That is, this nozzle is broadly configured by a nozzle body 1 and a nozzle needle 2, with the nozzle needle 2 being housed inside an axial hole 3 that is formed inside the nozzle body 1 such that the nozzle needle 2 is movable in the axial direction of the nozzle needle 2 (see FIG. 1).

The nozzle needle 2 is formed such that the site thereof that is positioned somewhat further toward its rear end side than its center in the axial direction of the nozzle needle 2 (the vertical direction of the page in FIG. 1) has a larger diameter than the other site, and this site serves as a sliding portion 4 that slides with respect to the inner peripheral surface of the axial hole 3 as described next.

The axial hole 3 in the nozzle body 1 opens to the rear end side of the nozzle body 1 and is formed as far as near the distal end of the nozzle body 1, and particularly the site of the axial hole 3 that corresponds to the aforementioned sliding portion 4 of the nozzle needle 2 serves as a sliding guide portion 5 that supports and guides the nozzle needle 2 such that the nozzle needle 2 is movable in the axial direction of the nozzle needle 2.

Further, an extension portion 6 of the nozzle needle 2 that extends from the aforementioned sliding portion 4 extends inside a cylinder portion 1a that is formed coaxially with the sliding guide portion 5 of the nozzle body 1, and the distal end portion of the extension portion 6 is formed in a tapered shape and serves as a valve head portion 7. It will be noted that the inner diameter of the cylinder portion 1a is set to be slightly larger than the outer diameter of the extension portion 6, so that there is a slight clearance between the cylinder portion 1a and the extension portion 6.

A seat portion 8 in which the valve head portion 7 sits is formed inside the distal end portion of the nozzle body 1, and an injection hole 9 that is drilled into the distal end portion of the nozzle body 1 is opened and closed as a result of the valve head portion 7 sitting on and moving away from the seat portion 8.

Further, inside the nozzle body 1, the site that moves from the sliding guide portion 5 to the cylinder portion 1a serves as an oil reservoir 10, and high pressure fuel that is supplied via a fuel introduction path 11 that is formed so as to be communicated with this oil reservoir 10 and so as to open to the rear end surface of the nozzle body 1 is stored in the oil reservoir 10.

In the nozzle of this configuration, the inner peripheral surface of the sliding guide portion 5 and the seat portion 8, which are surface-treated portions, are administered a surface treatment by later-described surface modifying electrical discharge machining method, and this point is characteristically different from a conventional nozzle.

Moreover, because a surface treatment of the inside of this nozzle body 1 is performed, the nozzle needle 2 is characteristically different from a conventional nozzle also in the point that the outer diameter of the sliding portion 4 is machine-treated to match the inner diameter of the sliding guide portion 5 of the nozzle body 1.

Next, a procedure of manufacturing this nozzle will be generally described with reference to FIG. 2.

In the nozzle of the embodiment of the present invention, a surface treatment by surface modifying electrical discharge machining method (whose details will be described later) is administered to the inner peripheral surface of the sliding guide portion 5 of the nozzle body 1 and to the seat portion 8 (see FIG. 2(a)), and thereafter finish machining of the portions to which that surface treatment has been administered is performed (see FIG. 2(b)).

Next, the inner diameter of the sliding guide portion 5 is measured, outer diameter machining of the sliding portion 4 of the nozzle needle 2 is administered, so that the outer diameter of the sliding portion 4 conforms to that measured inner diameter, and manufacturing of the nozzle is performed (see FIG. 2(c)).

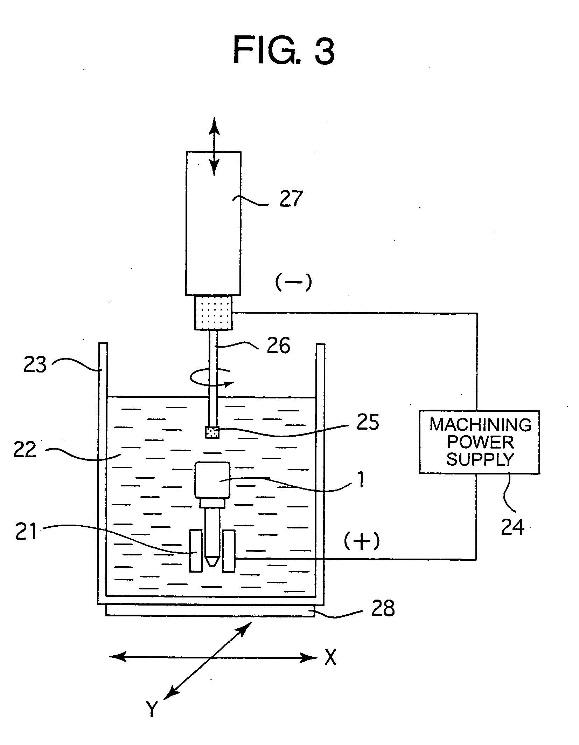

Next, the surface modifying electrical discharge machining method that is administered to the inner peripheral surface of the sliding guide portion 5 and to the seat portion 8 will be described with reference to FIG. 3.

The surface modifying electrical discharge machining method itself is already publicly known, but in FIG. 3 there is shown the basic configuration of the surface modifying electrical discharge machining method that is performed in the nozzle manufacturing process of the embodiment of the present invention.

First, in a state where the distal end portion vicinity of the nozzle body 1 that is the target of the surface modifying electrical discharge machining is held in a holding tool 21 that comprises a conductive material that holds the nozzle body 1, the nozzle body 1 is placed together with this holding tool 21 in a machining bath 23 that is filled with an insulating machining oil 22. Then, a cathode of a machining power supply 24 is connected to the holding tool 21.

A semi-sintered electrode 25 that is used as an electrode for electrical discharge in the surface modifying electrical discharge machining method is a composite structural body that is formed by hardening a metal powder that easily forms a carbide. Particularly when a titanium material is used, it is known that a hard coating of titanium carbide that is extremely hard can be deposited, and it is preferred that the semi-sintered electrode 25 comprises this titanium material.

The semi-sintered electrode 25 is held by an electrode supporting tube 26 that comprises an insulating material. The electrode supporting tube 26 is formed so that its inside is a hollow circular cylinder (not shown), a wire from the machining power supply 24 is connected via that portion to the semi-sintered electrode 25, and the semi-sintered electrode 25 is connected to an anode of the machining power supply 24.

Further, the electrode supporting tube 26 is connected to a motor 27, can arbitrarily rotate, and is capable of moving in the axial direction (the vertical direction of the page in FIG. 3) by servo control of another motor that is not shown.

The machining bath 23 is placed on a moving table 28 that is capable of moving to a desired position in two-dimensional directions, that is, in other words, in the directions of an x-axis and a y-axis, and is rotatably disposed, so that surface treatment of a desired site inside the nozzle body 1 is made possible by the rotation of the semi-sintered electrode 25 and by the movement of the machining bath 23, that is, the movement and rotation of the nozzle body 1.

When electrical discharge machining is to be performed, the semi-sintered electrode 25 is inserted inside the nozzle body 1 and is moved to the site where surface treatment is necessary by servo control, and electrical discharge is performed between the semi-sintered electrode 25 and the nozzle body 1 at that position.

It will be noted that the output of the machining power supply 24 is usually a pulse output, and the specific pulse duration, peak current valve and pulse frequency differ depending on the specific condition of the surface treatment that is required and should be individually set in accordance with that specific condition.

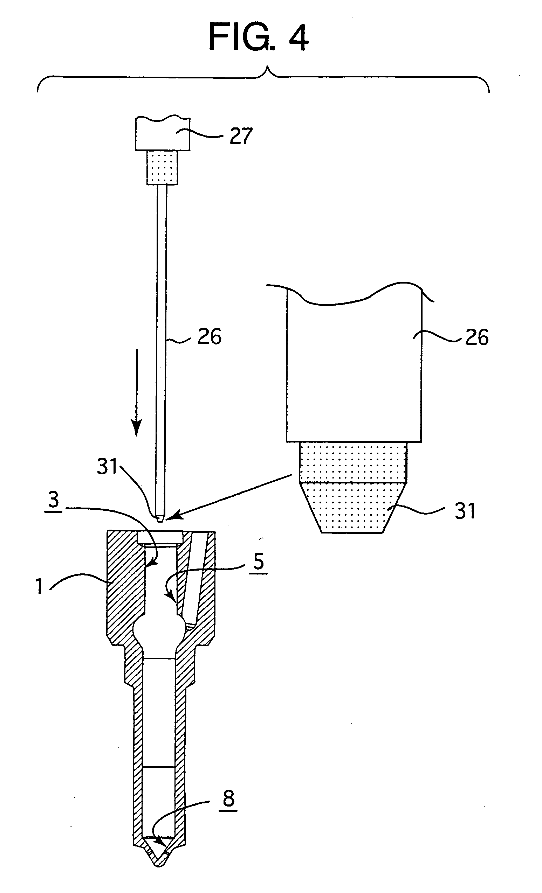

Next, a more specific procedure of the surface treatment by the surface modifying electrical discharge machining method with respect to the seat portion 8 will be described with reference to FIG. 4 to FIG. 9.

First, it is preferred that a first semi-sintered electrode 31 that is used in the surface treatment of the seat portion 8 is formed in a circular column shape and is tapered so that the distal end portion of the first semi-sintered electrode 31 becomes smaller in diameter toward the distal end (see FIG. 4).

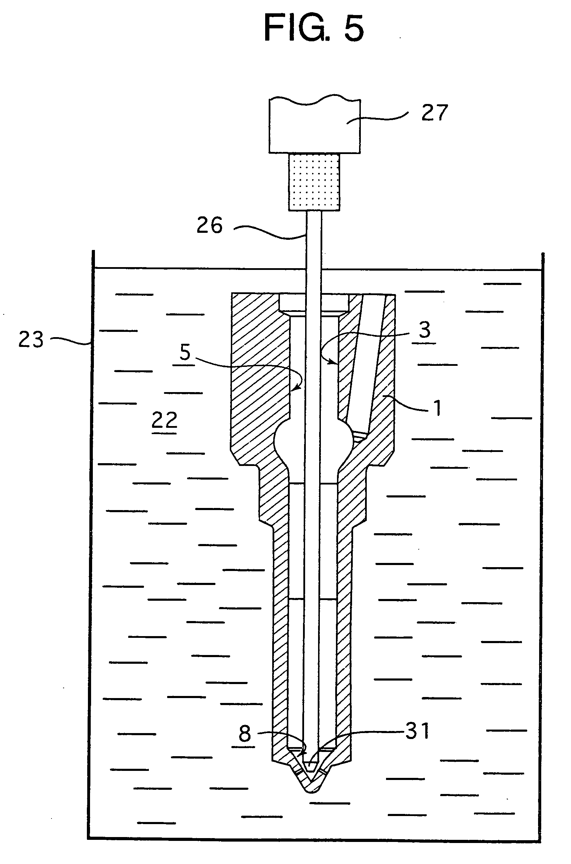

Additionally, this first semi-sintered electrode 31 is held in the distal end portion of the electrode supporting tube 26, which is sufficiently longer than the length in a longitudinal axis direction (the vertical direction of the page in FIG. 4) of the nozzle body 1 (see FIG. 4), is inserted inside the axial hole 3 in the nozzle body 1, and is positioned near the seat portion 8 (see FIG. 4 and FIG. 5).

It will be noted that, when this first semi-sintered electrode 31 is to be inserted inside the nozzle body 1, the nozzle body 1 is positioned beforehand inside the machining bath 23 that has been filled with the machining oil (see FIG. 5). It will be noted that, in FIG. 5, the holding tool 21 and the machining power supply 24 shown in FIG. 3 and the wire of the machining power supply 24 are omitted.

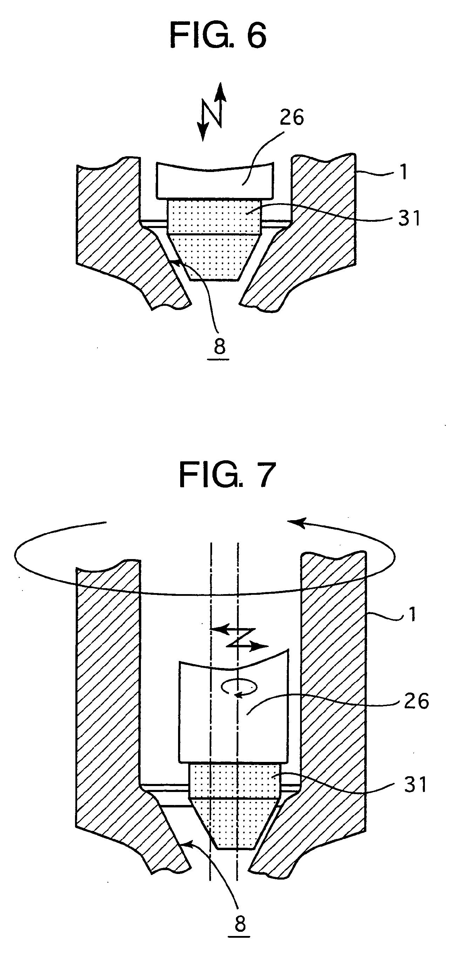

As for the relative positional relationship between the first semi-sintered electrode 31 and the seat portion 8, as shown in FIG. 6, it is preferred that the tapered portion of the first semi-sintered electrode 31 and the seat portion 8 are in positions facing each other with a substantially equal distance overall being disposed therebetween.

Additionally, in this case, at the time of electrical discharge, the first semi-sintered electrode 31 may be placed in a fixed state, or the first semi-sintered electrode 31 may be rotated about its central axis.

It will be noted that the central axis of the first semi-sintered electrode 31 is hypothetical and that, realistically, it is configured beforehand so that the first semi-sintered electrode 31 is rotated using the center of the first semi-sintered electrode 31 as a rotational center when the first semi-sintered electrode 31 has been attached to the motor 27 together with the electrode supporting tube 26. The same is true in regard also to later-described second semi-sintered electrodes 32 and 32A.

Further, as for the relative positional relationship between the first semi-sintered electrode 31 and the seat portion 8, as shown in FIG. 7, it is preferred even when the first semi-sintered electrode 31 is positioned so that the central axis of the first semi-sintered electrode 31 is displaced in the radial direction from the central axis of the nozzle body 1 and approaches any site of the seat portion 8.

Additionally, in this case, it is preferred that the first semi-sintered electrode 31 is rotated about its central axis and that the moving table 28 is rotated, whereby the nozzle body 1 is rotated about its central axis and electrical discharge is performed.

Further, in regard to the nozzle body 1 also, its central axis is hypothetical and, realistically, it is configured beforehand so that the place when the nozzle body 1 is positioned inside the machining bath 23 on the moving table 28 together with the holding tool 21 is determined, and the nozzle body 1 is positioned there and the moving table 28 is rotated, whereby the nozzle body 1 can rotate about its hypothetical central axis.

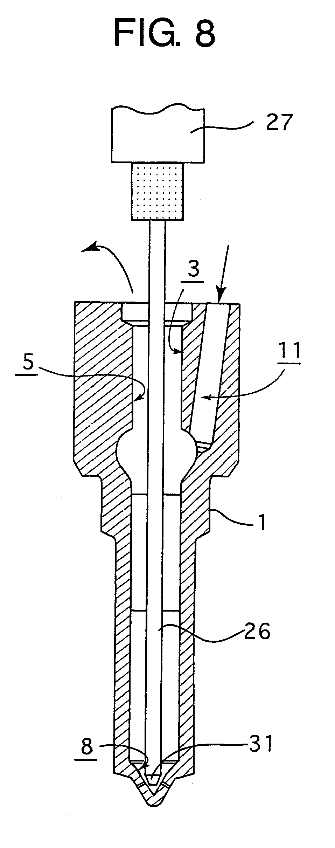

It will be noted that, in the aforementioned case, electrical discharge machining using the machining bath 23 is performed, but because the range to which the surface treatment is to be administered is relatively small, the machining bath 23 is not invariably necessary; for example, it is preferred even when the machining oil is injected from the fuel introduction path 11 of the nozzle body 1, the axial hole 3 is filled with the machining oil, and the machining oil is allowed to spill and flow out to the outside from the open portion of the axial hole 3 on the rear end side of the nozzle body 1 (see FIG. 8).

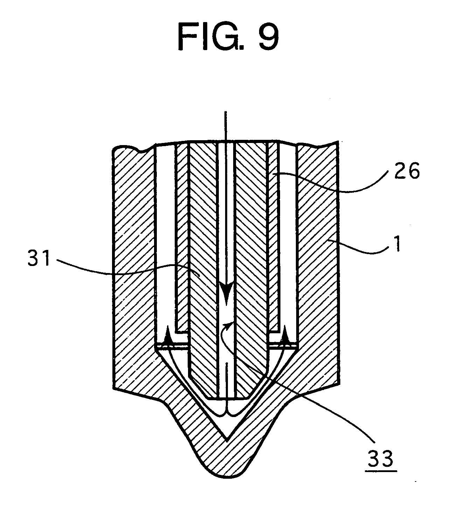

Further, it is preferred even when a center portion of the first semi-sintered electrode 31 is drilled in the longitudinal direction of the first semi-sintered electrode 31 and so as to take the form of a hollow circular cylinder to dispose therein an injection path 33 that serves as a machining fluid passage, the machining oil is injected into this injection path 33 on the rear end side of the electrode supporting tube 26, and the machining oil is caused to fill the space between the first semi-sintered electrode 31 and the seat portion 8 from the open portion of the injection path 33 on the distal end side of the first semi-sintered electrode 31 (see FIG. 9).

Additionally, in a case before formation of the injection hole 9, the machining oil may also be allowed to spill and flow out to the outside from the open portion of the axial hole 3 on the rear end side of the nozzle body 1.

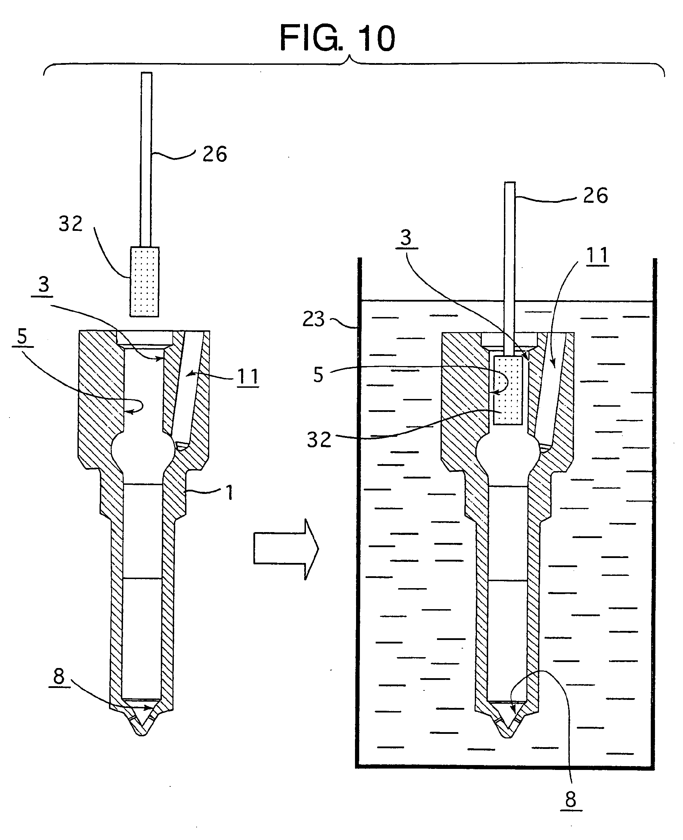

Next, a more specific procedure of the surface treatment by the surface modifying electrical discharge machining method with respect to the sliding guide portion 5 will be described with reference to FIG. 10 to FIG. 16.

First, it is preferred that a second semi-sintered electrode 32 that is used in the surface treatment of the sliding guide portion 5 is formed in a circular column shape (see FIG. 10).

Then, in a state where the nozzle body 1 has been positioned inside the machining bath 23 that has been filled with machining oil, the second semi-sintered electrode 32 is inserted inside the nozzle body 1 and positioned in the sliding guide portion 5 (see FIG. 10). It will be noted that, in FIG. 10, the holding tool 21 and the machining power supply 24 shown in FIG. 3 and the wire of the machining power supply 24 are omitted.

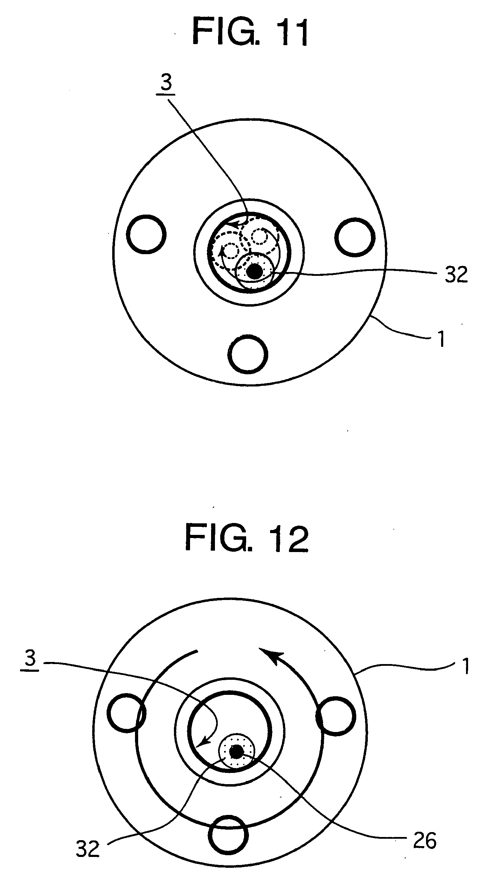

As for a more specific relative positional relationship between the second semi-sintered electrode 32 and the sliding guide portion 5 at the time of electrical discharge, it is preferred that the center of the second semi-sintered electrode 32 is displaced in the radial direction from the center of the nozzle body 1 and placed in a position approaching part of the inner peripheral surface of the sliding guide portion 5, and that, in this state, the second semi-sintered electrode 32 is rotated in the circumferential direction of the sliding guide portion 5 (see FIG. 11). It will be noted that FIG. 11 is a schematic diagram schematically showing the position of the second semi-sintered electrode 32 with respect to the sliding guide portion 5 at the time of electrical discharge in a cross section in the radial direction of the nozzle body 1.

Further, as for a more specific relative positional relationship between the second semi-sintered electrode 32 and the sliding guide portion 5 at the time of electrical discharge, it is preferred even when, in the state where the second semi-sintered electrode 32 has been positioned as mentioned above, only the nozzle body 1 is rotated about its central axis (see FIG. 12).

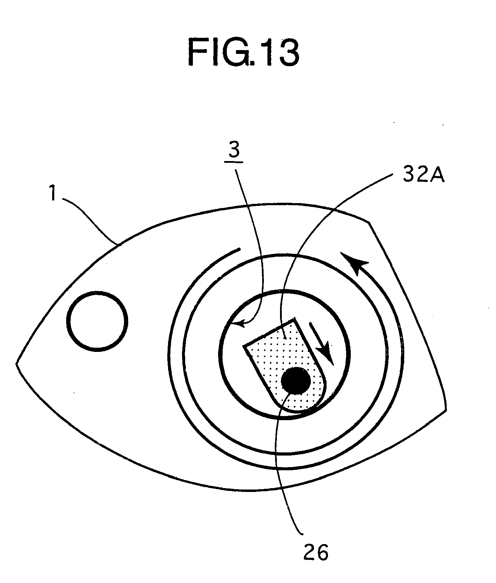

Moreover, it is preferred even when a second semi-sintered electrode 32A that is formed in a shape that includes, in part thereof, a circular arc in its radial direction cross section is used (see FIG. 13). The radial direction cross section of the second semi-sintered electrode 32A in the example shown in this FIG. 13 has a shape where one side of a rectangle is made into a circular arc.

Additionally, in this case, at the time of electrical discharge, it is preferred that the circular arc portion of the second semi-sintered electrode 32A is placed in a state where it approaches and faces part of the inner peripheral surface of the sliding guide portion 5 and that only the nozzle body 1 is rotated about its central axis (see FIG. 13).

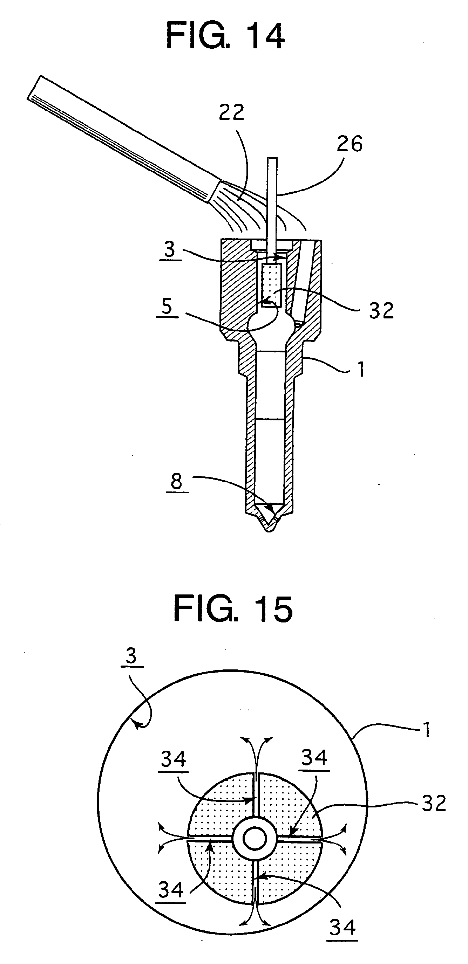

It will be noted that, in this surface treatment of the sliding guide portion 5, the machining bath 23 is used, but the machining bath 23 is not invariably necessary; for example, it is preferred even when the machining oil 22 is injected from the open portion of the axial hole 3 on the rear end side of the nozzle body 1, the inside of the axial hole 3 is filled with the machining oil, and the machining oil is allowed to spill and flow out to the outside from the fuel introduction path 11 (see FIG. 14).

When a method is used where the machining oil is injected in this manner, slits 34 that extend in the axial direction of the second semi-sintered electrode 32 may be plurally disposed at appropriate intervals in the circumferential direction to make the flow of the machining oil in the sliding guide portion 5 smooth, which is preferred (see FIG. 15).

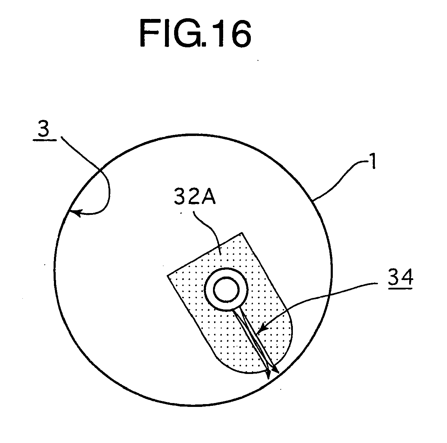

It will be noted that an example where a slit 34 is formed in the second semi-sintered electrode 32A is shown in FIG. 16. In this example, one slit 34 is disposed in the circular arc portion of the second semi-sintered electrode 32A. In other words, the slit 34 is formed in the portion of the second semi-sintered electrode 32A that faces the sliding guide portion 5 at the time of electrical discharge.

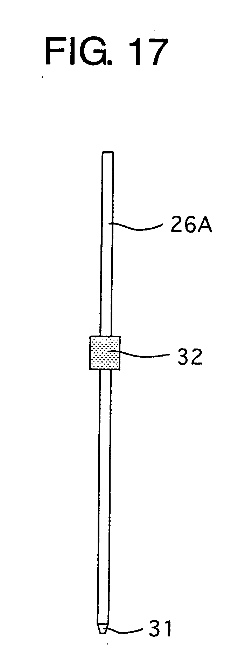

In the aforementioned example, description has been given assuming that the first semi-sintered electrode 31 and the second semi-sintered electrode 32 are appropriately exchanged in accordance with the place where electrical discharge machining is to be performed and are attached to the electrode supporting tube 26; however, for example, as shown in FIG. 17, it is preferred even when the first semi-sintered electrode 31 and the second semi-sintered electrode 32 are attached to one electrode supporting tube 26A with an appropriate distance being disposed therebetween.

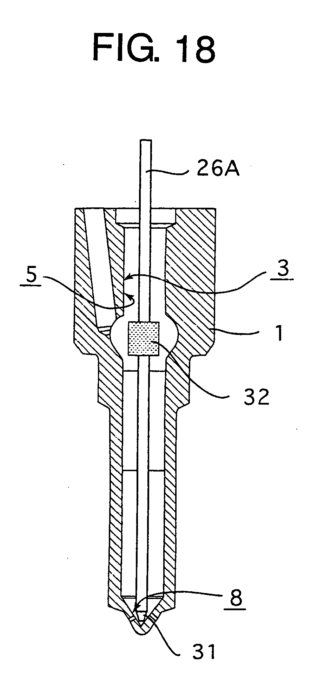

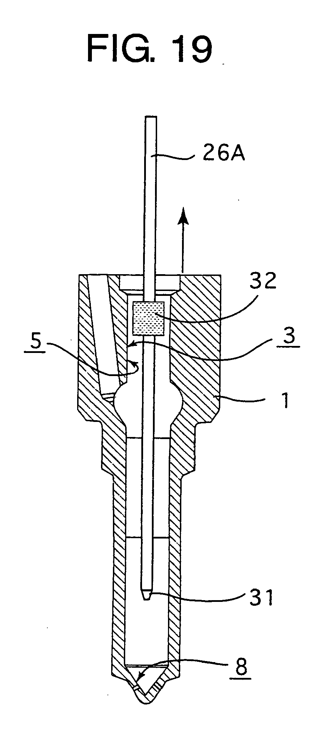

In this case, the electrode supporting tube 26A is moved in its axial direction, whereby the first and second semi-sintered electrodes 31 and 32 are positioned in sites where a surface treatment is to be administered as described previously (see FIG. 18 and FIG. 19).

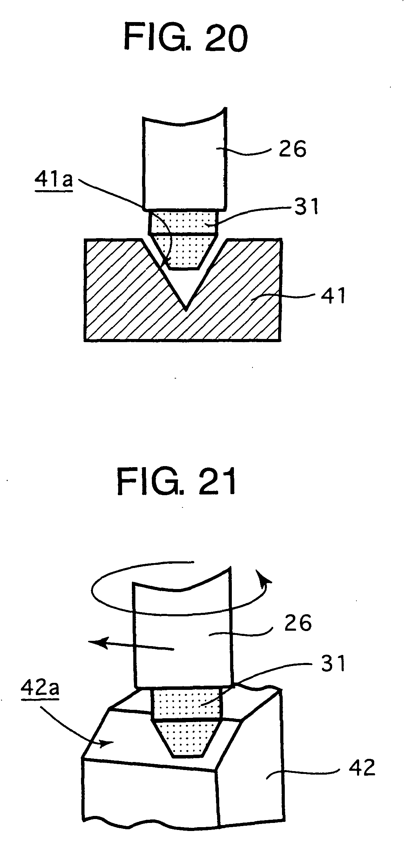

Next, semi-sintered electrode dressing will be described with reference to FIG. 20 to FIG. 22.

Here, an example of dressing of the first semi-sintered electrode 31 where deformation of the end portion resulting from electrical discharge machining becomes pronounced will be described.

FIG. 20 shows an example where a dressing jig 41 that includes an inverted cone-shaped recessed portion 41a is used, and the first semi-sintered electrode 31 is pushed inside the recessed portion 41a, whereby particularly the distal end portion is shaped into its intended shape.

Further, a dressing jig 42 shown in FIG. 21 may also be used. That is, this dressing jig 42 has a structure that includes a slanted surface 42a where at least one right angle portion thereof has been diagonally cut out. Additionally, it is preferred that the first semi-sintered electrode 31 is rotated so as to push particularly the tapered portion of the first semi-sintered electrode 31 against this slanted surface 42a and that the first semi-sintered electrode 31 is moved in the horizontal direction on the slanted surface 42a to perform dressing.

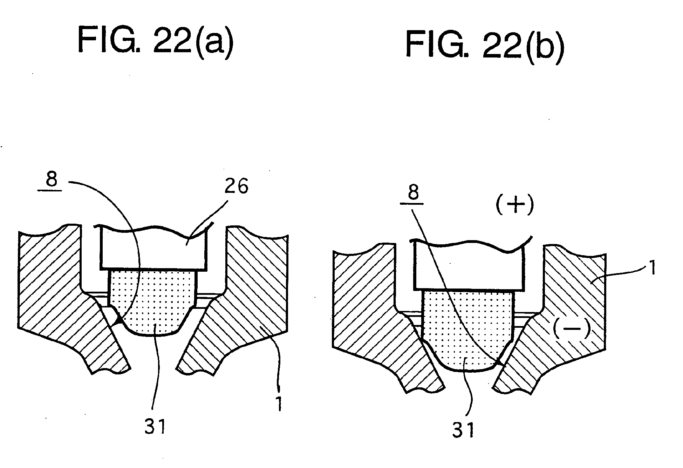

Next, an example of dressing resulting from opposite electrical discharge will be described with reference to FIG. 22.

This example has the characteristic that dressing is possible even immediately before electrical discharge machining is performed, and, first, the first semi-sintered electrode 31 is positioned near the seat portion 8 in the same manner as when electrical discharge machining is normally performed (see FIG. 22(a)). Next, opposite electrical discharge is performed by making the connection polarities of the first semi-sintered electrode 31 and the machining power supply 24 (see FIG. 3) of the nozzle body 1 the opposite from normal, that is, using the first semi-sintered electrode 31 as a cathode and using the nozzle body 1 as an anode. Because of this opposite electrical discharge, it becomes possible to simply dress particularly the tapered portion of the first semi-sintered electrode 31.

Then, after dressing, the connection polarities are returned to their original polarities and electrical discharge machining is performed in the regions that have been described previously.

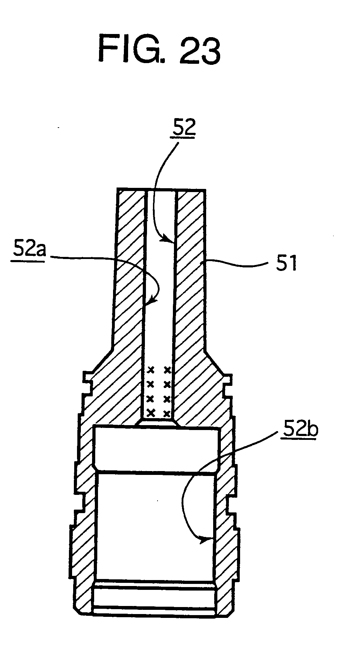

Next, a case where the workpiece manufacturing method pertaining to the present invention is applied in regard to a barrel 51 that is a configural part of a fuel injection pump as another example of a workpiece will be described with reference to FIG. 23 to FIG. 26.

The barrel 51 configures a fuel injection pump together with an unillustrated plunger, and a hole 52 in which the plunger (not shown) moves in the axial direction thereof is drilled inside the barrel 51 (see FIG. 23). This hole 52 comprises a small diameter portion 52a and a large diameter portion 52b, and in this example, the peripheral wall portion of part of the small diameter portion 52a on the near side moving from the small diameter portion 52a to the large diameter portion 52b particularly serves as a portion that requires surface treatment for the sliding of the plunger. It will be noted that, in FIG. 23, the range where the surface treatment becomes necessary is indicated by "x" marks.

For the surface treatment of the inside of this barrel 51, it is preferred that a surface treatment resulting from surface modifying electrical discharge machining using the second semi-sintered electrode 32 is administered.

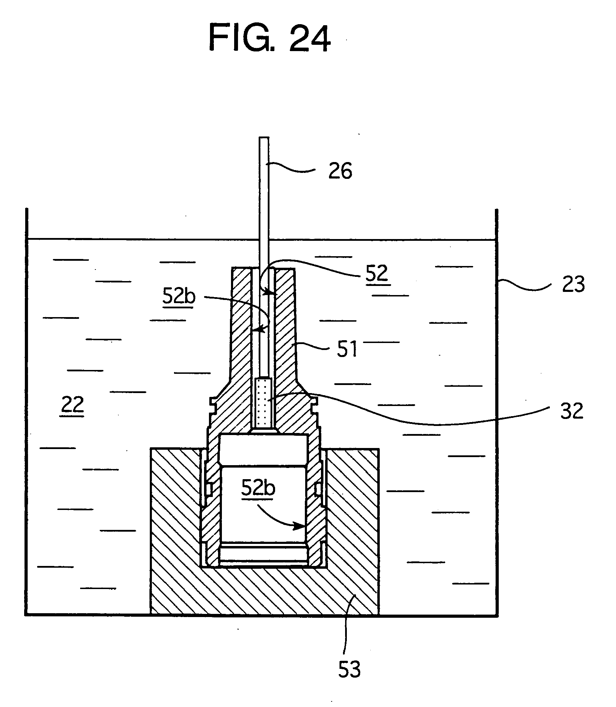

Specifically, as shown in FIG. 24, the barrel 51 is placed inside the machining bath 23 in a state where the barrel 51 is held in a barrel holding tool 53, and a surface treatment resulting from electrical discharge machining is performed in basically the same manner as shown in FIG. 10. It will be noted that, in this case, as for the positional relationship between the second semi-sintered electrode 32 and the barrel 51 at the time of electrical discharge, similar to what has been described previously in FIG. 11 to FIG. 13, either can of course be appropriately used.

After the surface treatment of the inside of the barrel 51 has been performed in this manner, the inner diameter of the hole 52 is measured and outer diameter machining of the unillustrated plunger is administered, which is the same as in the case of the nozzle manufacturing that has been described previously.

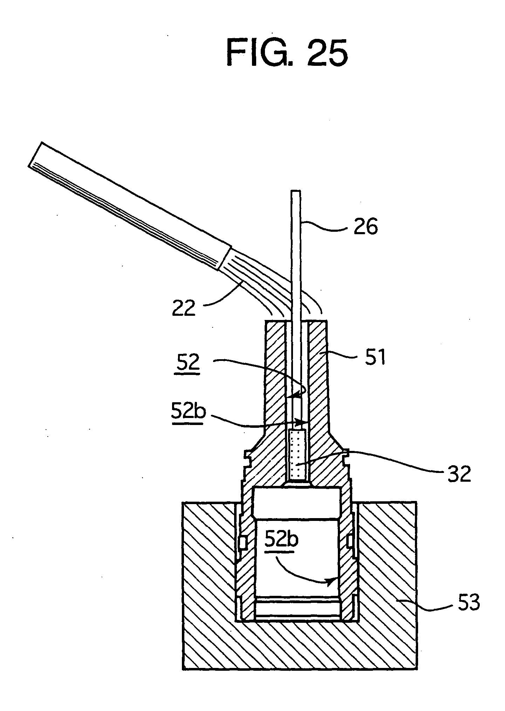

Further, instead of using the machining bath 23, it is preferred even when the machining oil 22 is injected from one open portion of the barrel 51 (see FIG. 25). It will be noted that, in this case, a passage (not shown) that is communicated with this hole 52 and is for the inflow of fuel is formed in the barrel 51 in addition to the hole 52, so the machining oil that has been injected and fills the inside of the hole 52 can be caused to flow out to the outside via this passage (not shown).

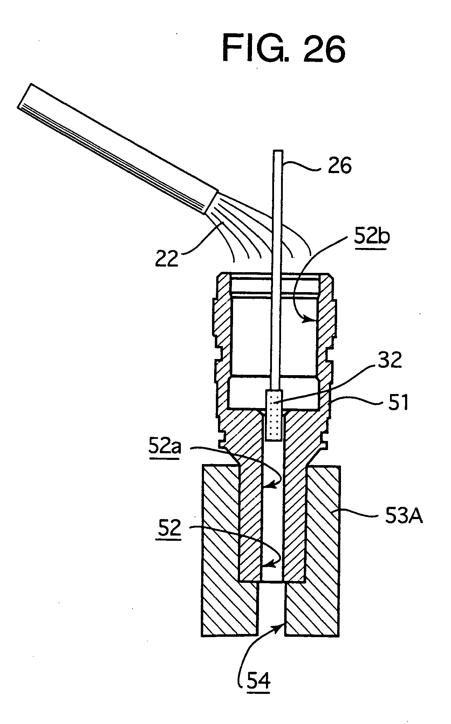

Further, it is preferred even when a barrel holding tool 53A that holds the barrel 51 at the site where the small diameter portion 52a of the hole 52 is formed and in which a communicating hole 54 that is communicated with that held portion is formed is used (see FIG. 26). In this case, the machining oil 22 is injected from the open portion of the large diameter portion 52b of the hole 52 and is discharged to the outside via the communicating hole 54 (see FIG. 26).

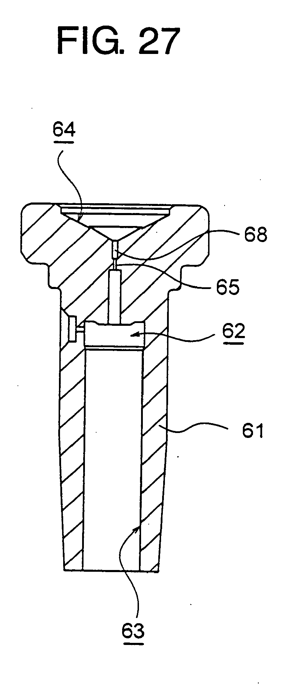

Next, an example of a case where the surface treatment by the surface modifying electrical discharge machining method of the embodiment of the present invention is administered to a seat portion of a valve body that configures an injector, for example, will be described with reference to FIG. 27 to FIG. 29.

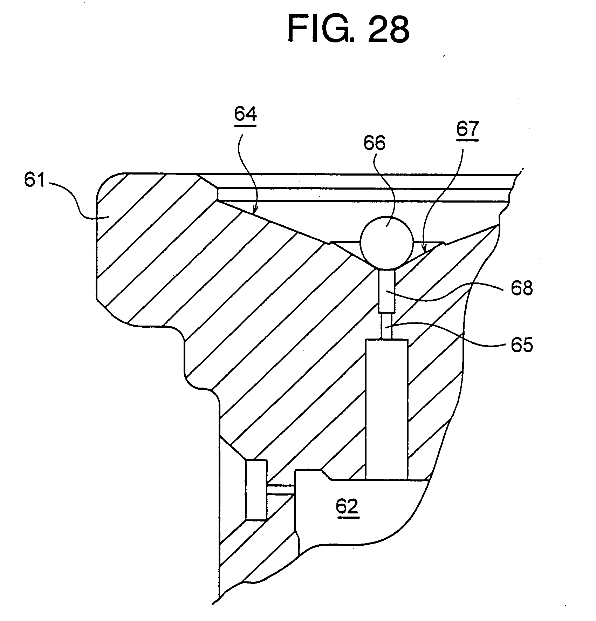

A valve body 61 of the embodiment of the present invention is used in a publicly known/well-known injector (not shown) that injects and supplies high pressure fuel to the inside of a cylinder of a diesel engine in a common rail fuel injection control system, for example. That is, a control pressure chamber 62 that controls the fuel injection amount and the injection pressure by the injector is formed in the valve body 61, and the valve body 61 is formed as a structure that enables pressure control of that control pressure chamber 62 (see FIG. 27 and FIG. 28).

This valve body 61 is configured using a material whose overall outer shape is substantially columnar, and a sliding hole 63 whose one end opens to one end portion of the valve body 61 and whose other end portion extends as far as an appropriate position near the other end side of the valve body 61 is formed in the valve body 61 in a longitudinal axis direction of the valve body 61 (the vertical direction of the page in FIG. 27). This sliding hole 63 is one in which an unillustrated valve piston is disposed so that the valve piston may freely slide, and the vicinity of the end portion on the opposite side of the open side serves as the control pressure chamber 62.

Additionally, a seat forming portion 64 is disposed as a recess in a substantially conical shape in the top portion of the valve body 61 close to the control pressure chamber 62. Additionally, the vicinity of the center of this seat forming portion 64 is communicated with the aforementioned control pressure chamber 62 via a fuel passage 68 that is formed inside the valve body 61, and an opening/closing orifice 65 is formed in an appropriate position in the middle of this fuel passage 68.

Further, a valve ball 66 that is configured using a material such as a ceramic, for example, is disposed in the seat forming portion 64 so as to block off the fuel passage 68 that opens to the central portion of the seat forming portion 64 (see FIG. 28). That is, the valve ball 66 is ordinarily attached to the distal end of an armature (not shown) that is formed in a columnar shape and disposed so as to be capable of reciprocal motion by electromagnetic force.

Additionally, the valve body 61 is capable of sitting in and moving away from the open portion of the fuel passage 68 formed in the center of the seat forming portion 64 and the site around the open portion in accompaniment with the reciprocal motion of the armature (not shown) in the longitudinal axis direction (the vertical direction of the page in FIG. 28) of the valve body 61, and the open portion of the fuel passage 68 in which the valve ball 66 sits and from which the valve ball 66 moves away and an appropriate site around the open portion serves as a seat portion 67 that serves as a surface-treated site to which the surface treatment resulting from the surface modifying electrical discharge machining has been administered as described next.

It will be noted that, here, the relationship between fuel injection and the sitting of the valve ball 66 on the seat portion 67 and the moving of the valve ball 66 away from the seat portion 67 will be generally described.

First, the control pressure chamber 62 is communicated with a high pressure side via an unillustrated high pressure fuel common passage, and the seat forming portion 64 is communicated with a low pressure side, so in a state where the valve ball 66 is seated in the seat portion 67, the control pressure chamber 62 is maintained in a high pressure state. For this reason, an unillustrated nozzle needle receives the back pressure of the control pressure chamber 62, an injection hole (not shown) is closed off, and fuel injection is stopped.

On the other hand, the valve ball 66 moves away from the seat portion 67, and the control pressure chamber 62 becomes communicated with the seat forming portion 64 via the opening/closing orifice 65, whereby the control pressure chamber 62 becomes communicated with the low pressure side. In this state, an upward pushing force with the high pressure fuel acts on a high pressure fuel pressure receiver that is formed on the distal end side of the nozzle needle (not shown), and the back pressure on the nozzle needle that acts from the control pressure chamber 62 drops, so the nozzle needle moves away from the injection hole (not shown), and fuel injection is performed.

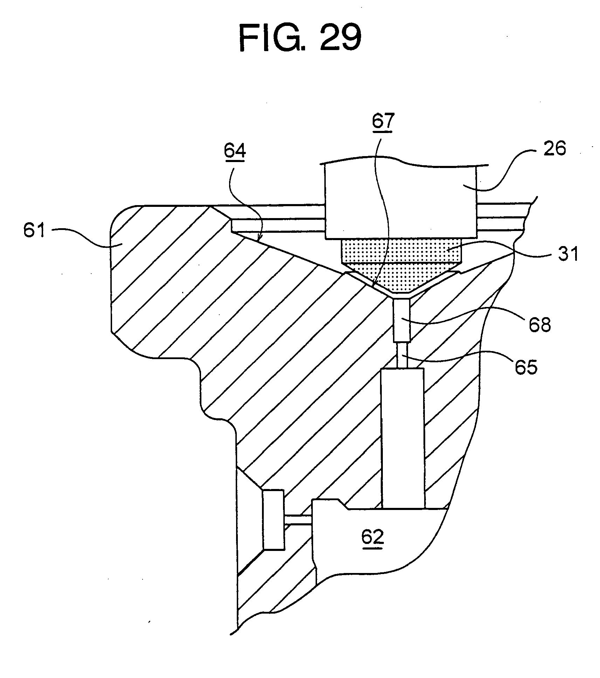

Next, a procedure of the surface treatment by the surface modifying electrical discharge machining method with respect to the seat portion 67 is basically the same as the procedure of the surface treatment by the surface modifying electrical discharge machining method with respect to the seat portion 8 of the nozzle body 1 that has been described previously with reference to FIG. 1 to FIG. 9. Consequently, here, an only overview thereof will be described with reference to FIG. 29, and redundant detailed description will be omitted.

When the surface treatment by the surface modifying electrical discharge machining method is to be administered to the seat portion 67, the first semi-sintered electrode 31 is positioned near the seat portion 67 (see FIG. 29), and electrical discharge is performed between the first semi-sintered electrode 31 and the seat portion 67.

It will be noted that the connection of the machining power supply 24 to the first semi-sintered electrode 31 and to the seat portion 67 conforms to the connection example shown in FIG. 3. Further, as for the supply of the machining oil 22, the machining oil 22 may fill the machining bath 23 as shown in FIG. 3 and the first semi-sintered electrode 31 and the valve body 61 may be disposed inside the machining bath 23 such that the machining oil 22 can be supplied between the first semi-sintered electrode 31 and the seat portion 67, or, the machining oil 22 can flow between the first semi-sintered electrode 31 and the seat portion 67; either is alright (see FIG. 8 and FIG. 9).

Moreover, in regard also to whether or not the first semi-sintered electrode 31 and the valve body 61 are rotated during electrical discharge, rotation may be appropriately selected in conformance to the case of the surface modifying electrical discharge machining with respect to the seat portion 8 that has been described previously with reference to FIG. 6 and FIG. 7.

As a result of this electrical discharge surface treatment being administered, the seat portion 67 becomes one where the surface-treated site thereof is difficult to come off and which has excellent resistance to wear.

It will be noted that, in the embodiment of the present invention, the machining oil is supplied between the workpiece and the semi-sintered electrode, but it is not necessary for the machining fluid to be limited to the machining oil, and it is of course alright even when the machining fluid is another fluid as long as it conforms to machining oil.

A surface treatment that is difficult to come off and which has excellent resistance to wear can be performed by a relatively simple procedure, so the present invention is suited for surface treatment of an injector or the like that includes a seat portion in which a valve ball or the like sits and from which the valve ball or the like moves away.

## Claims

1. An electrical discharge surface treatment method that performs surface treatment of a workpiece by surface modifying electrical discharge machining, the electrical discharge surface treatment method comprising:
positioning, in a machining fluid, a semi-sintered electrode that is configured using a predetermined material near a site-to-be-surface-treated of the workpiece that requires surface treatment, connecting a cathode of a machining power supply that outputs a pulse for electrical discharge to the workpiece, connecting an anode of the machining power supply to the semi-sintered electrode, and performing electrical discharge between the workpiece and the semi-sintered electrode while rotating the workpiece around the semi-sintered electrode to thereby form, on the site-to-be-surface-treated of the workpiece, a coating that is formed as a result of the predetermined material of the semi-sintered electrode being moved and deposited.

2. The electrical discharge surface treatment method according to claim 1, wherein the semi-sintered electrode is rotated about an axis in a longitudinal axis direction of the semi-sintered electrode together with the rotation of the workpiece.

3. An electrical discharge surface treatment method that performs surface treatment of a workpiece by electrical discharge, the electrical discharge surface treatment method comprising:
positioning a semi-sintered electrode that is configured using a predetermined material near a site-to-be-surface-treated of the workpiece that requires surface treatment, connecting a cathode of a machining power supply that outputs a pulse for electrical discharge to the workpiece, connecting an anode of the machining power supply to the semi-sintered electrode, and performing electrical discharge between the workpiece and the semi-sintered electrode while causing a machining fluid to flow between the workpiece and the semi-sintered electrode to thereby form, on the site-to-be-surface-treated of the workpiece, a coating that is formed as a result of the predetermined material of the semi-sintered electrode being moved and deposited.

4. The electrical discharge surface treatment method according to claim 3, wherein a machining fluid passage that opens to a distal end portion of the semi-sintered electrode along a central axis of the semi-sintered electrode is formed in the semi-sintered electrode, and the machining fluid is injected into the machining fluid passage and is discharged from the open portion, whereby the machining fluid fills the space between the workpiece and the semi-sintered electrode.

5. The electrical discharge surface treatment method according to claim 3, wherein slits along a central axis direction of the semi-sintered electrode are plurally formed in a circumferential direction in the semi-sintered electrode to enable the flow of the machining fluid along the slits.

6. The electrical discharge surface treatment method according to claim 3, wherein a site that is formed in the workpiece and through which the machining fluid is capable of flowing is appropriated to supply the machining fluid between the workpiece and the semi-sintered electrode.

7. A semi-sintered electrode dressing method that is used in an electrical discharge surface treatment method, the semi-sintered electrode dressing method comprising:
rotating a semi-sintered electrode while pushing the semi-sintered electrode against a slanted surface of a dressing jig that is configured to include at least one slanted surface and moving the semi-sintered electrode horizontally on the slanted surface to thereby dress the semi-sintered electrode.

8. A semi-sintered electrode dressing method that is used in an electrical discharge surface treatment method that positions, in a machining fluid, a semi-sintered electrode that is configured using a predetermined material near a site of a workpiece that requires surface treatment, connects a cathode of a machining power supply that outputs a pulse for electrical discharge to the workpiece, connects an anode of the machining power supply to the semi-sintered electrode, and performs electrical discharge between the workpiece and the semi-sintered electrode to thereby form, on the workpiece, a coating that is formed as a result of the predetermined material of the semi-sintered electrode being moved and deposited and perform surface treatment of the workpiece, the semi-sintered electrode dressing method comprising:
before the electrical discharge machining, connecting the cathode of the machining power supply to the semi-sintered electrode, connecting the anode of the machining power supply to the workpiece, and performing electrical discharge of the opposite polarity from the time of the electrical discharge machining between the workpiece and the semi-sintered electrode to thereby dress the semi-sintered electrode.

9. The electrical discharge surface treatment method according to any of claim 1 to claim 5, wherein the workpiece is a valve body where a seat portion in which a valve ball sits and from which the valve ball moves away and in which one end portion of a fuel passage opens to a center is disposed as a recess in one end side of a columnar member, with the seat portion serving as the site-to-be-surface-treated.

10. The electrical discharge surface treatment method according to claim 6, wherein
the workpiece is a valve body where a seat portion in which a valve ball sits and from which the valve ball moves away and in which one end portion of a fuel passage opens to a center is disposed as a recess in one end side of a columnar member, with the seat portion serving as the site-to-be-surface-treated, and
the machining fluid is injected from an opening in the site where the seat portion is formed.

11. The semi-sintered electrode dressing method according to claim 8, wherein the workpiece is a valve body where a seat portion in which a valve ball sits and from which the valve ball moves away and in which one end portion of a fuel passage opens to a center is disposed as a recess in one end side of a columnar member, with the seat portion serving as the site-to-be-surface-treated.

12. The surface treatment method according to any of claim 1 to claim 5, wherein the workpiece is a nozzle that comprises a needle that is formed in a columnar shape and a nozzle body in which the needle is slidably disposed inside, with a seat portion in which a distal end portion of the needle sits and from which the distal end portion of the needle moves away being formed inside the nozzle body, and with the seat portion serving as the site-to-be-surface-treated.

13. The electrical discharge surface treatment method according to claim 6, wherein
the workpiece is a nozzle that comprises a needle that is formed in a columnar shape and a nozzle body in which the needle is slidably disposed inside, with a seat portion in which a distal end portion of the needle sits and from which the distal end portion of the needle moves away being formed inside the nozzle body, and with the seat portion serving as the site-to-be-surface-treated, and
a sliding guide portion in which the needle is disposed so that the needle may freely slide is formed in the nozzle body, a fuel introduction passage whose one end is communicated with the sliding guide portion and whose other end opens to the outside of the nozzle body and which fuel introduction passage performs fuel introduction is formed in the nozzle body, and the fuel introduction passage is appropriated for supply of the machining fluid.

14. The semi-sintered electrode dressing method according to claim 8, wherein the workpiece is a nozzle that comprises a needle that is formed in a columnar shape and a nozzle body in which the needle is slidably disposed inside, with a seat portion in which a distal end portion of the needle sits and from which the distal end portion of the needle moves away being formed inside the nozzle body, and with the seat portion serving as the site-to-be-surface-treated.
